# DEMANDE DE BREVET EUROPEEN

(11) **EP 4 043 183 A1**
(43) Date de publication de la demande: **17.08.2022**
(21) Numéro de dépôt: 22152649.4
(22) Date de dépôt: 21.01.2022
(51) Int. Cl.: B29C 51/08, B29C 51/10, B29C 51/16

(54) **PROCÉDÉ DE FABRICATION D'EMBALLAGES EN PLASTIQUE REVÊTUS DE CARTON OU AUTRE MATÉRIAU BIO-SOURCÉ**

(30) Priorité: 12.02.2021 FR 2101365
(71) Demandeur: Groupe Guillin, 25290 Ornans (FR)
(72) Inventeur: MICHON, Frédéric, 70700 Gezier et Fontenelay (FR)
(74) Mandataire: Littolff, Denis

(57) **Abrégé**

Procédé de fabrication d'emballages comportant d'une part un conteneur en plastique thermoformé doté d'un fond et d'une paroi périphérique continue et d'autre part un revêtement en matériau de type carton (ou autre matériau bio-sourcé) recouvrant le fond et la paroi périphérique du conteneur.

La fourniture du revêtement s'effectue à plat, sous forme d'un flan prédécoupé et pré-rainé pour délimiter le fond et chaque partie recouvrant la paroi périphérique de l'emballage.

Le formage en trois dimensions du revêtement se fait par aspiration du fond délimité dans le flan au contact du fond (11) d'une cavité (10) du moule de thermoformage.

## Description

La présente invention se situe dans le domaine des emballages, et plus précisément dans celui des emballages obtenus par thermoformage d'une feuille plastique, le conteneur de l'emballage étant par ailleurs entouré d'un revêtement en matériau de type carton ou autre matériau bio-sourcé.

Plus précisément, ce revêtement est plaqué contre le fond et les parois latérales du conteneur de l'emballage, une telle structure bi-matière permettant notamment de s'inscrire dans une perspective environnementale en phase avec les préoccupations actuelles. L'utilisation d'un matériau de type carton à l'extérieur du plastique joue un rôle dans la tenue mécanique de l'emballage et permet de réduire l'épaisseur du récipient plastique, et par conséquent la quantité de plastique à recycler.

La fabrication de tels emballages nécessite le traitement de deux matériaux distincts, ce qui pose des problèmes particuliers par exemple dans l'organisation des chaînes de production et l'automatisation des cadences de production. Dans une perspective d'optimisation de l'industrialisation, on cherche à éviter de thermoformer l'emballage plastique d'un côté et de fabriquer séparément le revêtement à la forme de l'emballage avant de les associer dans une phase commune, par exemple en collant le revêtement à l'extérieur du récipient en plastique.

Dans le cadre de l'invention, le revêtement n'est d'ailleurs pas collé à la barquette en plastique - solution qui rendrait leur séparation et par conséquent leur recyclage bien plus difficile - mais est maintenu au récipient via des moyens de liaison résultant de la forme de l'emballage plastique. La solution mise en œuvre permet aux deux matériaux d'être facilement séparables manuellement, en fin de vie du produit, mais elle impose des contraintes particulières au moment de la fabrication.

Le revêtement en carton, entourant au moins les côtés du récipient, est ainsi retenu notamment par coincement entre le rebord et les parois du conteneur de l'emballage, et le thermoformage du plastique n'est réalisé que lorsque le revêtement est positionné dans une partie femelle du moule de thermoformage. Il y a donc, en amont du thermoformage du film plastique, des opérations d'alimentation et de positionnement des revêtements dans le moule.

L'objectif de l'invention est de les réaliser d'une part sans réduction sensible des cadences de production, et d'autre part sans modifications substantielles de l'outil de production. Ce dernier point, en particulier, est important, car tous les emballages thermoformés ne sont pas bi-matière, et les unités de fabrication doivent pouvoir facilement être adaptées à différents produits à partir de machines de thermoformages standards.

Actuellement, dans nombre de lignes de production d'emballages bi-matière, le revêtement en matériau de type carton est préformé en trois dimensions en amont de l'étape de moulage, notamment par thermoformage, et c'est par conséquent un objet en trois dimensions qu'il faut transférer, puis intégrer au moule en vue du thermoformage du film plastique dans le revêtement. L'encombrement de l'objet rend alors nécessaire de modifier l'outil : il faut par exemple basculer le moule femelle, réceptacle final du revêtement, ou encore augmenter l'entrefer entre les moules mâle et femelle, afin de pouvoir introduire le revêtement préformé dans une empreinte de forme appropriée du moule femelle.

Les changements structurels s'accompagnent ensuite d'une modification des cycles de fonctionnement, notamment en lien avec les déplacements des moules. Au final, le basculement ou l'augmentation des distances à parcourir entraînent un accroissement non négligeable de la durée de fabrication de chaque emballage, au détriment des cadences de production.

La présente invention vise à optimiser lesdites cadences de production, dans la fabrication des emballages bi-matière tels que décrits ci-dessus, en proposant une solution qui simplifie considérablement le transfert des revêtements vers l'unité de thermoformage, et qui permet d'utiliser une machine de thermoformage standard de manière normale.

Le procédé de l'invention, qui est donc conçu pour la fabrication d'emballages comportant d'une part un conteneur en plastique thermoformé doté d'un fond et d'une paroi périphérique continue et d'autre part un revêtement en matériau de type carton ou autre matériau biosourcé recouvrant le fond et la paroi périphérique du conteneur, présente à ces effets les étapes suivantes :
- fourniture du revêtement à plat, sous forme d'un flan prédécoupé et pré-rainé pour délimiter le fond et chaque partie recouvrant la paroi périphérique de l'emballage ;
- acheminement des flans dans un plan parallèle au plan de joint d'un moule de thermoformage, entre les moules femelle et mâle dudit moule en position ouverte ;
- positionnement dudit flan de sorte que le fond du revêtement délimité par pré-rainage soit à l'aplomb du fond d'une cavité d'une empreinte du moule femelle de forme correspondant à la forme tridimensionnelle du conteneur de l'emballage sur au moins une partie de la profondeur dudit conteneur ;
- formage en trois dimensions du revêtement par aspiration du fond délimité dans le flan au contact du fond de ladite cavité ;
- acheminement en bande continue de film plastique entre les moules femelle et mâle, dans un plan parallèle au plan de l'acheminement des flans plats et au-dessus de celui-ci ;
- déplacements conjugués des moules femelle et mâle en direction l'un de l'autre et du film plastique, dans une direction perpendiculaire aux plans d'acheminement des flans et de la bande continue de film ;
- moulage du film plastique d'une part par coopération mécanique de l'empreinte du moule femelle et d'au moins un noyau mobile et d'un cadre du moule mâle et d'autre part par gestion combinée d'une dépression au niveau de l'empreinte du moule femelle et d'une pression au niveau du moule mâle ; et
- évacuation de l'emballage dans une direction parallèle aux plans d'acheminement.

L'acheminement à plat du flan du revêtement permet d'utiliser une unité de thermoformage conventionnelle, qui est simplement alimentée lors de l'ouverture normale du moule, et ne nécessite pas de modification par exemple des entrefers séparant les parties mâle et femelle des moules. L'outil de thermoformage utilisé est par ailleurs une machine standard qui ne présente pas de partie basculante.

Le procédé de l'invention met de fait en œuvre un transfert très simplifié, l'acheminement des flans plats se faisant par le côté de l'unité de thermoformage standard, c'est-à-dire dans une direction perpendiculaire à l'alimentation en film plastique. In fine, le gain de temps pour la fabrication de chaque emballage bi-matière est appréciable.

Selon une configuration préférentielle, l'aspiration du flan peut être effectuée au moyen d'une ventouse mobile à dépression pneumatique localisée initialement au niveau du fond de la cavité, entraînée dans une direction perpendiculaire au plan de joint du moule de thermoformage jusqu'au flan plan, mise en dépression après contact avec ledit flan et entraînée en sens inverse jusqu'à atteindre sa localisation initiale.

En substance, le fond ou au moins une portion du fond de la cavité, configuré(e) en ventouse, se déplace en direction du revêtement à l'état encore aplati, pour l'attirer vers le fond de la cavité pratiquée dans l'empreinte du moule femelle, dimensionnée pour la fabrication de l'emballage voulu. Lorsque la ventouse est constituée de la totalité du fond, elle revient à sa position initiale correspondant audit dimensionnement prévu de la cavité. Le flan, étant donné qu'il est pré-rainé, se déforme naturellement au contact des parois de la cavité à mesure qu'il descend en s'y insérant, pour finir conformé dans sa forme tridimensionnelle finale lorsque le fond du revêtement arrive au contact du fond de la cavité ou que le fond de la cavité est revenu à sa position initiale. A ce stade, la ventouse, si elle ne forme qu'une portion du fond, est redevenue partie intégrante du fond de la cavité.

Le moule de thermoformage utilisé dans ce procédé de fabrication comporte en pratique une empreinte femelle comprenant une cavité dimensionnée pour le thermoformage du conteneur, dont le fond est une ventouse ou est muni d'une ventouse mobile reposant dans le fond et affleurant sa surface. Cette ventouse est solidarisée à un dispositif télescopique mobile en translation perpendiculairement au plan de joint du moule de thermoformage, ladite ventouse étant reliée, via un canal équipant l'intérieur du dispositif télescopique, à un conduit d'alimentation en air sous pression ou en dépression. Cette pression/dépression contrôle la fermeture et l'ouverture d'une soupape de passage de l'air vers la ventouse, ladite soupape étant maintenue en position fermée en cas de pression apte à entraîner la ventouse sur une distance au moins égale à la profondeur de la cavité, et s'ouvrant en cas de dépression, laissant retomber la ventouse.

Ce moule à ventouse mobile permet, par application de la pression, de faire monter la ventouse d'une distance suffisante pour la plaquer au contact du fond délimité par pré-rainage du revêtement encore aplati. Après contact avec ledit revêtement, le moule organise l'inversion de la pression au niveau de la ventouse, la dépression appliquée permettant alors l'aspiration du revêtement vers la cavité, le déplacement correspondant réalisant progressivement son formage tridimensionnel au contact des parois de la cavité. Le revêtement prend sa forme définitive lorsque les deux fonds arrivent au contact l'un de l'autre lorsque la ventouse ne constitue qu'une portion du fond de la cavité ou, dans l'hypothèse d'une ventouse qui couvre la totalité du fond de la cavité, lorsque ce dernier retrouve sa position initiale. L'amplitude du déplacement de la ventouse doit être au moins égale à la profondeur de la cavité pour lui permettre d'entrer en contact avec le revêtement aplati qui se situe au moins au niveau du débouché de ladite cavité.

Selon une configuration possible, la ventouse peut être solidaire d'un manchon reposant, en l'absence de pression, sur le fond d'une chambre dans laquelle débouche le conduit d'alimentation en air, ledit manchon étant librement coulissable à l'intérieur d'un tube guidé en translation de même direction que le manchon dans ladite chambre, le manchon étant équipé d'un canal intérieur reliant la ventouse à la chambre.

Le dispositif télescopique est donc constitué d'un manchon librement coulissable dans un tube lui-même libre de coulisser dans la chambre de réception du conduit d'alimentation en air sous pression ou en dépression. Le manchon est solidarisé à la ventouse, de sorte que la pression réalisée dans la chambre peut se retrouver au niveau de cette ventouse en cas d'ouverture de la soupape. C'est le cas lorsqu'une dépression y est appliquée, la ventouse étant alors active.

De préférence, dans cette configuration, le tube, qui repose sur le fond de la chambre, est déplaçable au travers d'une ouverture supérieure de la chambre et comporte d'une part une collerette inférieure formant butée par appui en bordure de l'ouverture, et d'autre part une surface annulaire supérieure entourant un orifice de passage du manchon, lequel comporte à son tour une collerette inférieure formant butée par appui sur la surface annulaire en bordure de l'orifice de passage du manchon.

La gestion de l'amplitude maximale du coulissement est assurée par les collerettes et leurs surfaces annulaires d'appui respectivement au niveau de l'ouverture supérieure de la chambre et de l'orifice de passage supérieur du tube. Le déploiement du dispositif télescopique s'effectue lorsque la chambre est en pression, la soupape étant alors fermée. L'air comprimé n'est, dans cet état, pas transmis à la ventouse. A l'inverse, en cas de dépression, la soupape s'ouvre et le dispositif télescopique se rétracte en même temps que la ventouse se retrouve en dépression, permettant d'attirer le revêtement aplati vers la cavité de l'empreinte du moule femelle.

La gestion des pressions assure de fait une double fonction : d'une part les déplacements de la ventouse et d'autre part sa capacité d'aspiration. Selon une possibilité propre à l'invention, la soupape peut être constituée d'une bille coopérant avec un siège situé au débouché inférieur du canal intérieur, ladite bille étant guidée, dans un espace du manchon situé dans le prolongement inférieur dudit canal, entre une position au contact du siège et une position à distance dudit siège.

D'autres buts et avantages de la présente invention apparaîtront au cours de la description qui va suivre se rapportant à un mode de réalisation qui n'est donné qu'à titre d'exemple indicatif et non limitatif.

La compréhension de cette description sera au surplus facilitée en se référant aux dessins joints en annexe et pour lesquels :
La figure 1 représente une vue en perspective d'une partie d'empreinte femelle d'un moule de thermoformage dotée d'une cavité de moulage d'un conteneur d'emballage, cavité dont le fond présente une ventouse qui n'occupe qu'une portion dudit fond et affleurant sa surface ;
La figure 2 montre une vue en perspective de la même empreinte femelle, la ventouse étant déplacée vers le haut en direction de l'ouverture supérieure de la cavité ;
La figure 3 représente une vue en perspective de la même empreinte femelle avec une coupe transversale médiane de la cavité, la ventouse étant déplacée vers le haut au contact du flan plan du revêtement en matériau de type carton positionné par rapport à la cavité ;
La figure 4 reprend la vue de la figure précédente, la ventouse étant redescendue dans le fond de la cavité en ayant attiré ledit revêtement, lequel a pris sa forme tridimensionnelle en se conformant au volume intérieur de la cavité ;
La figure 5 montre une variante de la configuration des figures précédentes avec une ventouse qui constitue la totalité du fond de la cavité pratiquée dans l'empreinte femelle du moule, ledit fond étant en position initiale correspondant aux dimensions de la cavité prévue pour le thermoformage de l'emballage ; et
La figure 6 représente la même variante, avec le fond/ventouse en position haute, pour entrer en contact avec le flan encore plan du revêtement en matériau de type carton et l'attirer vers la cavité.

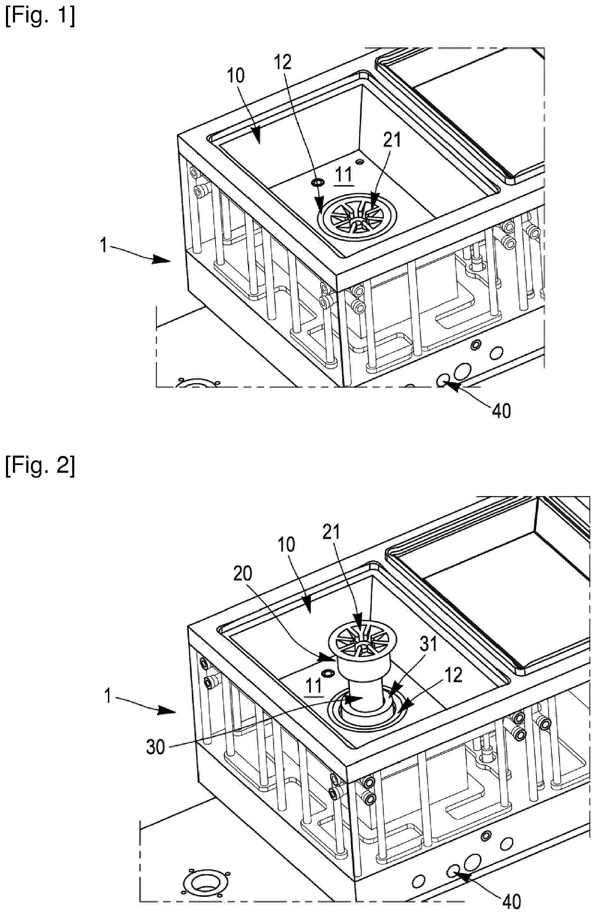

En référence à la figure 1, l'empreinte 1 femelle du moule de thermoformage, comprend, pour ce qui concerne la présente invention, une cavité 10 pour le moulage du conteneur en plastique de l'emballage. Le fond 11 de cette cavité présente une ventouse 21 intégrée au fond 11 de manière affleurante, et qui en occupe une partie centrale. On entend par là que la ventouse 21 ne dépasse pas de la surface du fond 11, pour ne pas interférer avec le thermoformage du fond du conteneur de l'emballage.

La ventouse 21 est mobile par rapport au fond 11 de la cavité 10, entraînée par un dispositif télescopique comportant notamment un manchon 30 fixé à la ventouse 21 et libre à coulissement dans un tube 31. Comme visible en figure 2, le fond 11 comporte une couronne annulaire 12 formant passage pour le dispositif télescopique, et qui retient la bordure périphérique de la ventouse 21 solidarisée à une entretoise 20, la profondeur de la couronne 12 étant calculée pour que l'affleurement précité se produise.

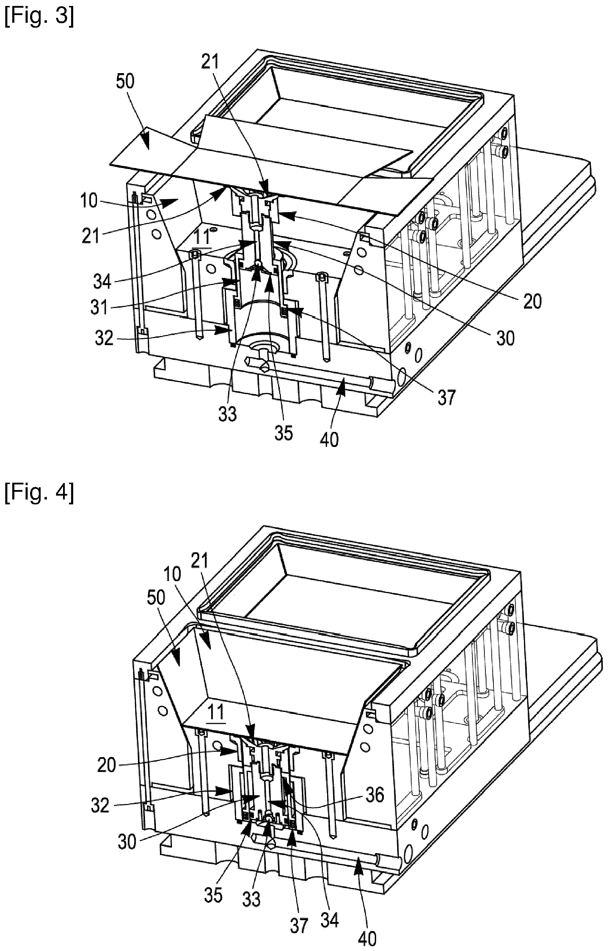

Le fonctionnement du dispositif télescopique et les dynamiques d'entraînement de la ventouse 21 sont plus apparents en référence aux figures 3 et 4. Ainsi, la ventouse 21 est solidarisée au manchon 30, l'ensemble formant une unité compacte mobile en translation à l'intérieur du tube 31. Celui-ci est à son tour guidé en translation dans une chambre 32 à paroi cylindrique pratiquée dans une plaque du moule 1 dont la surface supérieure constitue le fond 11 de la cavité 10, et dans laquelle débouche un conduit 40 relié à un système de gestion de la pression d'air alimentant ladite chambre 32. L'air est utilisé non seulement pour faire fonctionner la ventouse 21, lorsque la chambre 32 est mise en dépression, mais également pour actionner le dispositif télescopique, en particulier lorsque de l'air est injecté en pression.

Une soupape sous forme d'une bille 33 est placée au débouché inférieur d'un canal intérieur 34 traversant le manchon 30 et la ventouse 21. La bille 33 est guidée, dans un espace du manchon 30 prolongeant ledit canal 34, entre une position de fermeture au contact du siège sis au débouché du canal 34 (voir en figure 3) et une position d'ouverture sans contact avec celui-ci (qui est représentée en figure 4). Lorsque de l'air comprimé est injecté dans la chambre 32 via le conduit 40, la bille 33 est repoussée contre le siège et referme la soupape : l'air comprimé exerce alors une force contre la face inférieure du manchon 30, qui coulisse vers le haut de manière étanche dans le tube 31.

Le manchon 30 comporte en effet une collerette 35 inférieure munie d'un joint annulaire d'étanchéification, qui vient ensuite en butée contre une surface annulaire 36 entourant l'orifice par lequel le manchon 30 traverse le haut du tube 31. Toujours sous l'action de l'air en pression, qui ne peut s'écouler puisque la soupape à bille 33 est toujours fermée, le tube 31 coulisse à son tour dans la chambre 32 cylindrique, dans laquelle il est guidé notamment via une collerette inférieure 37 également munie d'un joint annulaire, qui réalise la même qualité d'étanchéité. Un guidage additionnel du tube 31 est réalisé par une ouverture circulaire pratiquée dans la paroi supérieure de la chambre 32, au contact de laquelle la collerette 37 fait butée en position de déploiement maximal du dispositif télescopique, tel que représenté en figure 3.

Dans cette position, la ventouse 21 entre en contact avec le flan encore plat 50, l'air comprimé injecté via le conduit 40 ayant finalement repoussé vers le haut ladite ventouse 21 jusqu'au flan du revêtement de type carton 50. Si aucune dépression n'est appliquée au niveau de la ventouse 21, elle n'est pas encore fonctionnelle pour jouer son rôle de ventouse. L'objectif du déplacement étant cependant d'attirer le flan 50 à l'intérieur de la cavité 10, le système de gestion automatisé du process de thermoformage inverse la pression dans le conduit 40, y appliquant une dépression.

Dans ce cas, la bille 33 n'est plus repoussée au contact de son siège au débouché du canal intérieur 34. La voie étant libre, la dépression s'applique dès lors également dans la ventouse 21 qui fait par conséquent adhérer le flan aplati 50. Dans le même temps, le dispositif télescopique n'est plus soutenu en position déployée, qui nécessite l'établissement d'une pression dans la chambre 32 et la fermeture corollaire du canal 34 par la bille 33. Ledit dispositif télescopique revient par conséquent en position rétractée, telle que montrée en figure 4, avec le tube 31 redescendu dans la chambre 32 ainsi que le manchon 30 à l'intérieur du tube 31, les deux se retrouvant reposant au contact du fond de la chambre 32. C'est ce qui est représenté en figure 4.

La ventouse 21 étant active, le flan 50 initialement sous forme plane (voir en figure 3) est attirée vers le fond 11 de la cavité 10, et se transforme progressivement, au contact et par guidage des parois latérales de ladite cavité 10, en un revêtement 50 tridimensionnel tel qu'il apparaît en figure 4. Le positionnement dudit revêtement dans l'empreinte femelle 1 du moule étant réalisé, le thermoformage de la feuille plastique peut commencer.

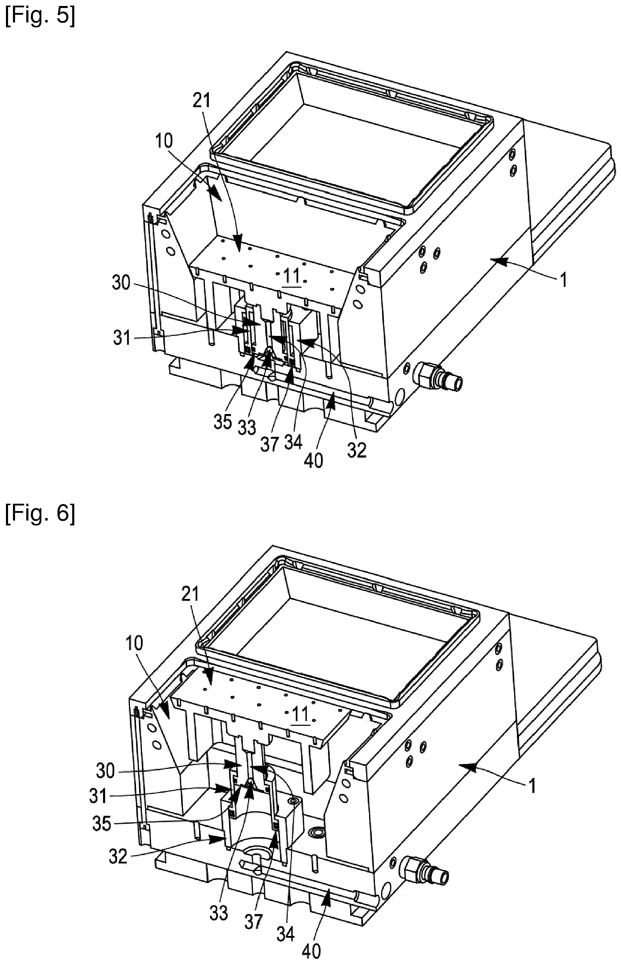

La variante des figures 5 et 6 fonctionne de la même manière, la seule différence se situant au niveau de la ventouse 21, qui est à présent constituée de la totalité du fond 11. C'est donc le fond 11/ventouse 21 qui est solidarisé au manchon 30 muni de son canal intérieur 34. La figure 5 montre le fond 11 en position initiale, c'est-à-dire en butée basse dans la cavité 10, apte à thermoformer un emballage de la forme et du volume voulus. Avant l'opération de thermoformage proprement dite, la totalité du fond 11 formant ventouse 21 est soulevée, dans les conditions expliquées auparavant, pour aller au contact du flan encore plan du revêtement 50. La mise en dépression dans la chambre 32 permet alors simultanément l'aspiration et la redescente du fond 11/ventouse 21, et la conformation en un revêtement tridimensionnel du flan 50.

Les différentes étapes du formage du revêtement 50 en trois dimensions, à partir de l'acheminement à plat du flan plan dudit revêtement 50 jusqu'à la configuration tridimensionnelle, représentées dans l'une des versions de l'invention en figures 3 et 4, sont mises en œuvre par le système avant de commencer le thermoformage. Ces opérations, y compris le positionnement du flan plan entre les deux parties mâle et femelle du moule de thermoformage, ne prennent qu'un temps réduit. Le fonctionnement du moule pour l'opération de thermoformage se fait de manière complètement classique du fait de l'arrivée des revêtements de type carton 50 à l'état aplati par le côté, qui n'entraîne aucune modification dans le positionnement des moules femelle et mâle. Dans le moule femelle, les seules modifications structurelles interviennent au niveau de la plaque de fond 11 de la cavité 10 principale, qui doit intégrer la ventouse 21 et ses moyens de déplacement, à savoir le dispositif télescopique décrit ci-dessus.

L'invention ne se limite pas à l'exemple expliqué en référence aux figures, mais englobe des variantes par exemple de forme et de dimensions pour la ventouse 21, le manchon 30, le tube 31, la forme du moule, etc...

## Revendications

1. Procédé de fabrication d'emballages comportant d'une part un conteneur en plastique thermoformé doté d'un fond et d'une paroi périphérique continue et d'autre part un revêtement en matériau de type carton ou autre matériau bio-sourcé (50) recouvrant le fond et la paroi périphérique du conteneur, **caractérisé en ce qu'**il comporte les étapes suivantes :
- fourniture du revêtement (50) à plat, sous forme d'un flan prédécoupé et pré-rainé pour délimiter le fond et chaque partie recouvrant la paroi périphérique de l'emballage ;
- acheminement des flans dans un plan parallèle au plan de joint d'un moule de thermoformage, entre les moules femelle (1) et mâle dudit moule en position ouverte ;
- positionnement dudit flan de sorte que le fond du revêtement délimité par pré-rainage soit à l'aplomb du fond (11) d'une cavité (10) d'une empreinte du moule femelle (1) de forme correspondant à la forme tridimensionnelle du conteneur de l'emballage sur au moins une partie de la profondeur dudit conteneur ;
- formage en trois dimensions du revêtement (50) par aspiration du fond délimité dans le flan au contact du fond (11) de ladite cavité (10) ;
- acheminement en bande continue de film plastique entre les moules femelle (1) et mâle, dans un plan parallèle au plan de l'acheminement des flans plats et au-dessus de celui-ci ;
- déplacements conjugués des moules femelle (1) et mâle en direction l'un de l'autre et du film plastique, dans une direction perpendiculaire aux plans d'acheminement des flans et de la bande continue de film ;
- moulage du film plastique d'une part par coopération mécanique de l'empreinte du moule femelle (1) et d'au moins un noyau mobile et d'un cadre du moule mâle et d'autre part par gestion combinée d'une dépression au niveau de l'empreinte du moule femelle (1) et d'une pression au niveau du moule mâle ; et
- évacuation de l'emballage dans une direction parallèle aux plans d'acheminement.

2. Procédé de fabrication d'emballages selon la revendication précédente, **caractérisé en ce que** l'aspiration du flan est effectuée au moyen d'une ventouse (21) mobile à dépression pneumatique localisée initialement au niveau du fond (11) de la cavité (10), entraînée dans une direction perpendiculaire au plan de joint du moule de thermoformage jusqu'au flan plan (50), mise en dépression après contact avec ledit flan et entraînée en sens inverse jusqu'à atteindre sa localisation initiale.

3. Moule de thermoformage d'emballages pour la mise en œuvre d'un procédé de fabrication d'emballage selon l'une quelconque des revendications précédentes, **caractérisé en ce que** l'empreinte femelle (1) comprend une cavité (10) dimensionnée pour le thermoformage du conteneur, dont le fond (11) est une ventouse (11) ou est muni d'une ventouse (21) mobile reposant dans le fond (11) et affleurant sa surface, ladite ventouse (11, 21) étant solidarisée à un dispositif télescopique mobile en translation perpendiculairement au plan de joint du moule de thermoformage, la ventouse (11, 21) étant reliée, via un canal (34) équipant l'intérieur du dispositif télescopique, à un conduit (40) d'alimentation en air sous pression ou en dépression, contrôlant l'ouverture et la fermeture d'une soupape (33) de passage de l'air vers la ventouse (11, 21), ladite soupape (33) étant maintenue en position fermée en cas de pression apte à entraîner la ventouse (11, 21) sur une distance au moins égale à la profondeur de la cavité (10), et s'ouvrant en cas de dépression, laissant retomber la ventouse (11, 21).

4. Moule pour thermoformage d'emballages selon la revendication précédente, **caractérisé en ce que** ventouse (11, 21) est solidaire d'un manchon (30) reposant, en l'absence de pression, sur le fond d'une chambre (32) dans laquelle débouche le conduit (40) d'alimentation en air, ledit manchon (30) étant librement coulissable à l'intérieur d'un tube (31) guidé en translation de même direction que le manchon (30) dans ladite chambre (32), le manchon (30) étant équipé d'un canal intérieur (34) reliant la ventouse (11, 21) à la chambre (32).

5. Moule pour thermoformage d'emballages selon la revendication précédente, **caractérisé en ce que** le tube (31), qui repose sur le fond de la chambre (32), est déplaçable au travers d'une ouverture supérieure de la chambre (32) et comporte d'une part une collerette (37) inférieure formant butée par appui en bordure de l'ouverture, et d'autre part une surface annulaire (36) supérieure entourant un orifice de passage du manchon (30), lequel comporte à son tour une collerette (35) inférieure formant butée par appui sur la surface annulaire (36) en bordure de l'orifice de passage du manchon (30).

6. Moule pour thermoformage d'emballages selon l'une des revendications 4 et 5, **caractérisé en ce que** la soupape est constituée d'une bille (33) coopérant avec un siège situé au débouché inférieur du canal intérieur (34), ladite bille (33) étant guidée, dans un espace du manchon (30) situé dans le prolongement inférieur dudit canal (34), entre une position au contact du siège et une position à distance dudit siège.
